# EUROPEAN PATENT APPLICATION

(11) **EP 4 134 771 A1**
(43) Date of publication of application: **15.02.2023**
(21) Application number: 21783990.1
(22) Date of filing: 03.02.2021
(51) Int. Cl.: G05D 1/02

(54) **AUTOMATED GUIDED VEHICLE TRAVEL CONTROL SYSTEM**

(30) Priority: 09.04.2020 JP 2020070411
(71) Applicant: Kataoka Corporation, Kyoto-shi, Kyoto 601-8203 (JP)
(72) Inventor: KOJITANI, Yusuke, Kyoto-shi, Kyoto 601-8203 (JP); MAEDA, Shigemi, Kyoto-shi, Kyoto 601-8203 (JP); YAMANE, Tomoya, Kyoto-shi, Kyoto 601-8203 (JP); TSURUTA, Kenji, Kyoto-shi, Kyoto 601-8203 (JP)
(74) Representative: TBK
(86) International application number: PCT/JP2021/003908
(87) International publication number: WO 2021/205730

(57) **Abstract**

In order to solve a problem that large amounts of labor and time are required to complete a highly reliable program for travel control, in a travel control system SS of an automated guided vehicle, an actual guided-vehicle travel controller 8 including an actual control program which causes a plurality of actual guided vehicles to travel along a plurality of travel routes crossing one another in an actual conveyance area, a virtual guided-vehicle travel controller 9 including a virtual control program which causes a plurality of virtual guided-vehicles B0 to B6 to travel by imitating a shape and a motion of the actual guided vehicles in a virtual conveyance area, a virtual guided-vehicle travel monitoring portion 11 which, in a case of occurrence of a collision or stop abnormality by the virtual guided vehicles B0 to B6, detects and records the abnormal phenomenon, a monitoring-result output portion 12 which outputs the detected abnormal phenomenon to outside, and an update-data input portion 13 which receives update data modified by referring to the output abnormal phenomenon from outside and finally reflects it in the actual control program are provided.

## Description

### [Technical Field]

The present invention relates to a travel control system of an automated guided vehicle which automatically conveys a target to be conveyed to a desired position.

### [Background Art]

In plants, warehouses and the like in recent years, various automated guided vehicles (hereinafter, referred to as an "AGV" in some cases) are used. This type of automated guided vehicle is controlled to travel on a travel route set in advance on the basis of a program of an AGV travel controller, and there are not a few systems in which the travel of a plurality of AGVs is comprehensively controlled by a common AGV travel controller.

By the way, when a plurality of the AGVs are caused to travel at the same time along a plurality of travel routes crossing one another in a predetermined conveyance area by using the system as above, the program needs to be designed thoroughly in advance so that a collision among the AGVs traveling on each travel route or stop by an emergency stop function, which is brought into a deadlock state, should not occur.

However, the more the number of AGVs is increased with respect to a limited area of the conveyance area, the more complicated a work to create such a program becomes, and occurrence of bugs cannot be avoided. Thus, conventionally, a work of modifying the program in case of non-conformity needs to be repeated by causing an actual AGV to travel in an actual conveyance area at a stage where the program is provisionally completed. Thus, large amounts of labor and time are required for completing a program with high reliability.

Note that, as in an example shown in the following Patent Literature 1, such control is known that the AGV travel controller sequentially determines the travel position of each AGV, predicts a travel route a little ahead, and executes control so that a collision or travel stop by interference among the AGVs does not occur. However, the one of such a type executes travel control of each of the actual AGVs by performing simplified travel prediction by the unit of a travel block aligned along a travel route, and it cannot be applied easily to a highly-efficient conveyance system capable of causing a large number of AGVs to travel in a small conveyance area. Even if it is employed forcedly, inappropriateness in basic design of the program or presence of small bugs would cause travel stop due to a collision or interference among the AGVs or non-conformity such that travel stop time for travel prediction would be abnormally long or the like would occur, and complicated modification works of the program are anticipated to be forced.

### [Citation List]

### [Patent Literature]

[PTL 1]
Japanese Patent Application Publication No. H11-259131

### [Summary of Invention]

### [Technical Problem]

The present invention was made in view of such circumstances and has an object to solve the aforementioned problem that large amounts of labor and time are required to complete the highly reliable program for travel control.

### [Solution to Problem]

In order to solve the aforementioned problem, a travel control system of an automated guided vehicle according to the present invention has configuration as described below.

That is, a travel control system of an automated guided vehicle according to an invention in claim 1 is configured by including an actual guided-vehicle travel controller including an actual control program which causes a plurality of actual guided vehicles to travel along a plurality of travel routes crossing one another in an actual conveyance area, a virtual guided-vehicle travel controller including a virtual control program which causes a plurality of virtual guided vehicles to travel by imitating a shape and a motion of the actual guided vehicles in a virtual conveyance area, a virtual guided-vehicle travel monitoring portion which detects and records an abnormal phenomenon, in case of a collision or a stop abnormality of the virtual guided vehicle controlled by this virtual guided-vehicle travel controller in the virtual conveyance area, a monitoring-result output portion which outputs the abnormal phenomenon detected by this virtual guided-vehicle travel monitoring portion to outside, and an update-data input portion which receives update data modified by referring to the abnormal phenomenon output from this monitoring-result output portion from the outside and causes the update data to be finally reflected in the actual control program.

A travel control system of an automated guided vehicle according to an invention in claim 2 is configured by including a travel control-data input portion into which travel control data used for an actual control program which causes a plurality of actual guided vehicles to travel along a plurality of travel routes crossing one another in an actual travel area is input, a virtual guided-vehicle travel controller including a virtual control program which causes a plurality of virtual guided vehicles to travel by imitating a shape and a motion of the actual guided vehicles in a virtual travel area on the basis of travel control data from this travel-control data input portion, a virtual guided-vehicle travel monitoring portion which detects and records an abnormal phenomenon, in case of a collision or a stop abnormality of the virtual guided vehicle controlled by this virtual guided-vehicle travel controller in the virtual travel area, and a monitoring-result output portion which outputs the abnormal phenomenon detected by this virtual guided-vehicle travel monitoring portion to outside.

With those as above, by referring to the abnormal phenomenon output from the monitoring-result output portion, a debugging work can be performed efficiently in a short period of time, and a highly reliable program for travel control of an automated guided vehicle can be completed in a short period of time.

A travel control system of an automated guided vehicle according to an invention in claim 3 is configured by including an actual guided-vehicle travel controller including an actual control program which causes a plurality of actual guided vehicles to travel along a plurality of travel routes crossing one another in an actual travel area, a travel-control data output portion which outputs the travel control data included in the actual control program used by the actual guided-vehicle travel controller to outside as information for simulation which causes a plurality of virtual guided vehicles to travel in a virtual conveyance area by imitating a shape and a motion of the actual guided vehicle, and an update-data input portion which receives update data created on the basis of a simulation result by using the information from the outside and which causes the update data to be finally reflected in the actual control program.

With those as above, by outputting the travel control data from the travel-control data output portion as the information for simulation to the outside and by reflecting the update data created on the basis of the simulation result using the information in the actual control program, a highly reliable program for travel control of the automated guided vehicle can be executed in a short period of time.

Here, the "actual control program" in the present invention is a program for executing travel control of a plurality of automated guided vehicles by using travel conditions, travel routes, and setting information, and a program similar to the control program mounted on an existing AGV controller can be also used.

The "virtual control program" is a program for executing the travel control of a plurality of the virtual guided vehicles by using travel conditions, travel routes, and setting information and is equivalent to the aforementioned "actual control program".

The "travel control data" is data including the travel conditions, travel routes, and setting information for causing a plurality of the guided vehicles to travel along the plurality of travel routes crossing one another.

The "update data" is data including new travel conditions, new travel routes, and setting information used in the actual control program and the virtual control program. That is, the "update data" is data for updating contents of the "travel control data" and to newly reflect them in the actual control program and the virtual control program.

The "travel condition" in the "travel control data" and the "update data" includes travel-interference avoidance information among automated guided vehicles, stop position information and the like. Here, the travel-interference avoidance information is information for avoiding collisions among the plurality of the automated guided vehicles or travel stop (= travel interference) by getting closer. This travel-interference avoidance information includes, as described in PTL1, for example, travel control information in which a travel route is divided into a plurality of blocks so that a plurality of automated guided vehicles cannot intrude into a predetermined block. By controlling the travel of the automated guided vehicle in accordance with this information, the travel interference is avoided. The stop position information refers to information on a position on which stop should be made on a route on which the automated guided vehicle travels, and as a result of the aforementioned travel-interference avoidance control, since some of the automated guided vehicles stop and stand by at a determined stop position, the travel interference is avoided. The stop position information includes those described below, for example. In PTL1, a unit of the "block" corresponds to the stop position information, and rough travel interference avoidance is executed by the unit of a block. In an embodiment of the present invention described below, a stop position on which the stop should be made on the travel route is set by a coordinate by the unit of millimeters. As a result, a distance relationship when another automated guided vehicle travels in the vicinity of an automated guided vehicle which stops at a defined stop position is confirmed, including an outline size of the automated guided vehicle, and even if the number of the automated guided vehicles increases, reliable travel interference determination can be made.

The "travel route" in the "travel control data" and the "update data" is set in a conveyance area map which defines the conveyance area by the coordinates and includes information (travel route information which will be described later) indicating a position which the guided vehicle should pass when traveling by referring to its own position information.

The "setting information" in the travel control data" and the "update data" includes traveling speed information, obstacle detection-distance information and the like at each position of the automated guided vehicle.

To "output the abnormal phenomenon detected by the virtual guided-vehicle travel monitoring portion to outside" includes a mode of printing/outputting information indicating the detected abnormal phenomenon, a mode of displaying it on a screen, a mode of outputting it in a data format usable by an outside information processing device and the like via a communication line and the like.

Suitable configurations of a travel control system of an automated guided vehicle having the virtual guided-vehicle travel controller and the actual guided-vehicle travel controller include the one in which the virtual guided-vehicle travel controller is provided together with the actual guided-vehicle controller.

Configurations for further reducing time required for simulation include the one in which a cycle time for executing a routine in the virtual control program can be executed in a time shorter than that of the cycle time of the actual control program.

As configurations for allowing visual recognition of a state of the virtual guided vehicle during simulation and for allowing visual recognition of occurrence of an abnormal phenomenon at the same time if it occurs, the one including a display portion which displays a state in which the plurality of virtual guided vehicles travel in the virtual conveyance area by being controlled by the virtual control program can be visually recognized from outside and displays the abnormal phenomenon recorded in the virtual guided-vehicle travel monitoring portion is cited.

As Configurations for particularly facilitating identification of a cause of the abnormal phenomenon required for a debugging work and for promoting higher efficiency of the debugging work, the one such that the information recorded in the virtual guided-vehicle travel monitoring portion includes timestamp information at the time when the abnormal phenomenon occurred, the virtual guided vehicle's own position information, and the virtual guided vehicle's travel route information is cited.

### [Advantageous Effects of Invention]

According to the present invention, the debugging work of the actual control program mounted on the actual guided-vehicle travel controller can be performed efficiently in a short period of time, and a highly reliable program for travel control of the automated guided vehicle can be completed in a short period of time.

### [Brief Description of Drawings]

[Fig. 1]

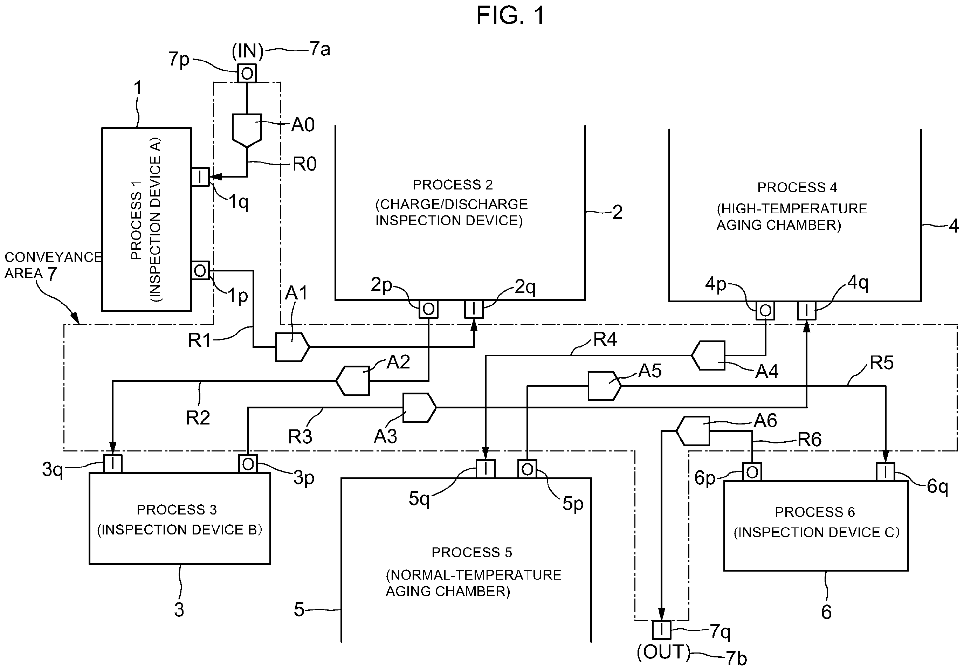

   Fig. 1 is a schematic diagram of a charge/discharge inspection plant according to an embodiment of the present invention.
[Fig. 2]

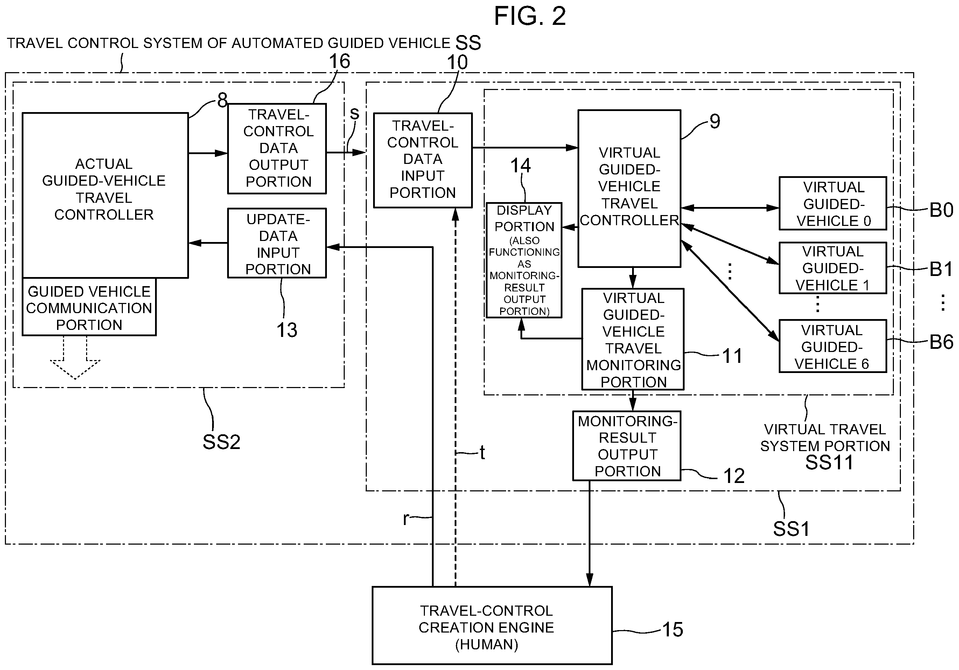

   FIG. 2 is a functional explanatory diagram of a travel control system according to the embodiment.
[FIG. 3]

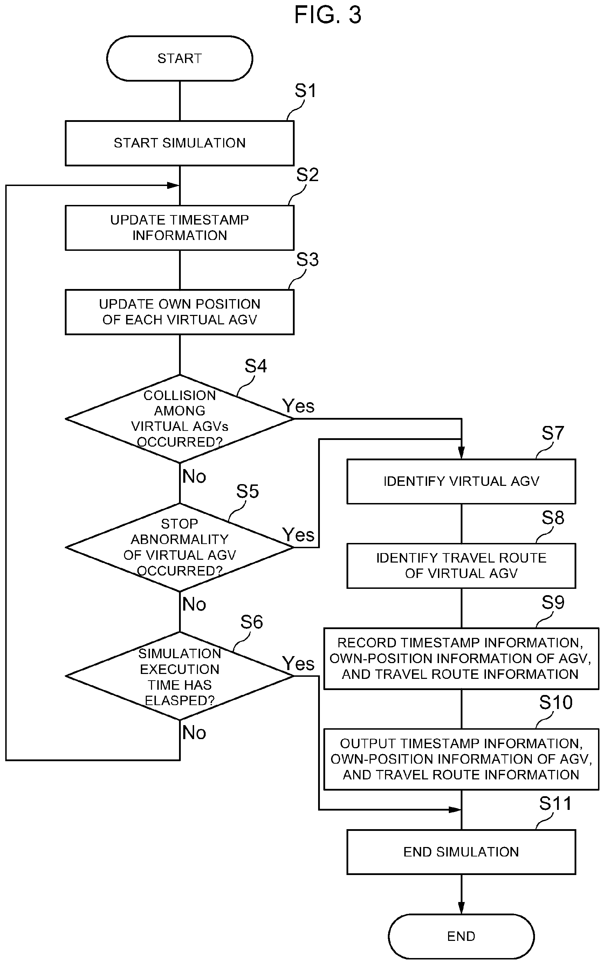

   FIG. 3 is a flowchart illustrating an operation of the travel control system according to the embodiment in a simplified manner.
[FIG. 4]

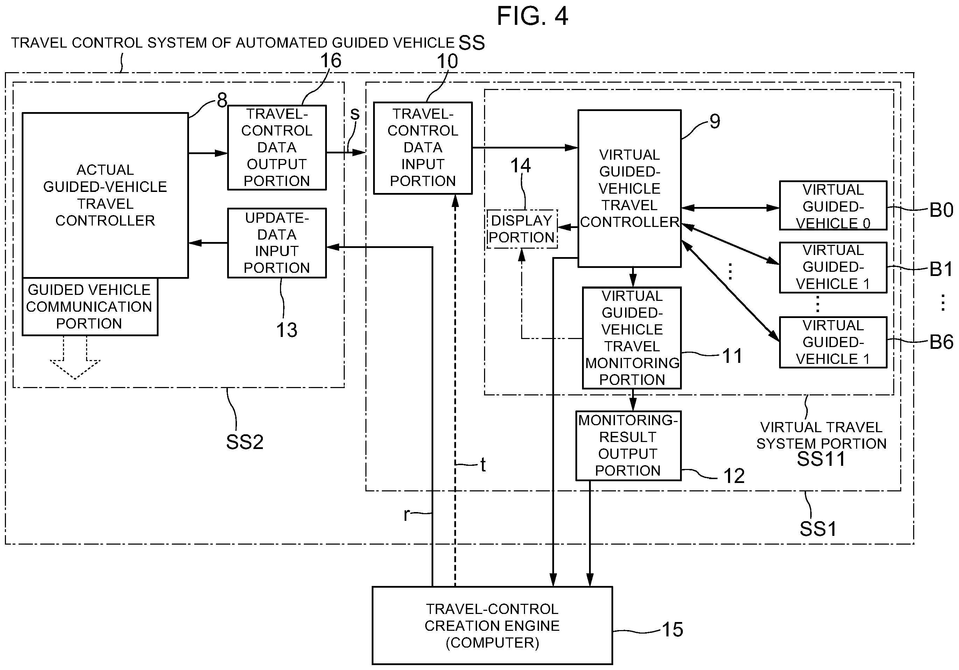

   FIG. 4 is a functional explanatory diagram of a travel control system of another embodiment of the present invention.

### [Description of Embodiments]

Hereinafter, an embodiment of the present invention will be described by referring to FIG. 1 to FIG. 3.

FIG. 1 to FIG. 3 illustrate the present invention by using an example of a travel control system of an automated guided vehicle operated in a charge/discharge inspection plant of a battery cell, in which FIG. 1 is a schematic diagram illustrating an outline of an actual charge/discharge inspection plant, FIG. 2 is a functional explanatory diagram of a travel control system of an automated guided vehicle used in this charge/discharge inspection plant, and FIG. 3 is a flowchart illustrating an operation of the travel control system in a simplified manner.

### <Example of Environment to which Present Invention is Applied>

In the charge/discharge inspection plant illustrated in FIG. 1 as an example, a first work area 1 corresponding to a first process of a charge/discharge inspection, a second work area 2 corresponding to a second process, a third work area 3 corresponding to a third process, a fourth work area 4 corresponding to a fourth process, a fifth work area 5 corresponding to a fifth process, and a sixth work area 6 corresponding to a sixth process are disposed, and a conveyance area 7 for conveying a battery cell, which is a workpiece, by actual guided vehicles (AGVs) A0 to A6 is set among the first to sixth work areas 1 to 6. Note that, in FIG. 1, the first process to the sixth process are referred to as a process 1 to a process 6, respectively.

At an inlet 7a of the conveyance area 7, a delivery conveyer 7p for introducing the workpiece to be carried into the conveyance area 7 from outside is provided, and at an outlet 7b, a receiving conveyer 7q for receiving the workpiece to be carried out to the outside after the inspection is disposed. In each of the work areas 1 to 6, the receiving conveyers 1q to 6q for receiving the workpiece to be introduced into the work areas 1 to 6 and the delivery conveyers 1p to 6p for delivering the workpiece to be guided out from the work areas 1 to 6 after the work are provided, respectively.

In the conveyance area 7, a travel route R0 from the delivery conveyer 7p at the inlet 7a to the receiving conveyer 1q of the first work area 1, a travel route R1 from the delivery conveyer 1p of the first work area 1 to the receiving conveyer 2q of the second work area 2, a travel route R2 from the delivery conveyer 2p of the second work area 2 to the receiving conveyer 3q of the third work area 3, a travel route R3 from the delivery conveyer 3p of the third work area 3 to the receiving conveyer 4q of the fourth work area 4, a travel route R4 from the delivery conveyer 4p of the fourth work area 4 to the receiving conveyer 5q of the fifth work area 5, a travel route R5 from the delivery conveyer 5p of the fifth work area 5 to the receiving conveyer 6q of the sixth work area 6, and a travel route R6 from the delivery conveyer 6p of the sixth work area 6 to the receiving conveyer 7q of the outlet 7b in the conveyance area 7 are set.

The actual guided vehicles A0 to A6 are controlled by an actual guided-vehicle travel controller 8 so as to travel in the conveyance area 7 along these travel routes R0 to R6 and perform a conveyance operation so as to sequentially introduce the workpieces supplied from the inlet 7a of the conveyance area 7 finally to the outlet 7b of the conveyance area 7 via the first work area 1 to the sixth work area 6.

As the actual guided vehicles A0 to A6 and the actual guided-vehicle travel controller 8, those widely-spread AGVs and existing products called AGV travel controllers can be used as they are, and explanation of structures, detailed functions and the like thereof will be omitted. Production of an actual control program for causing the actual guided vehicles A0 to A6 to travel along the plurality of travel routes R0 to R6 and a work of mounting them on the actual guided-vehicle travel controller 8 are also performed in accordance with methods conventionally used in general. Specifically, a person called a travel-control creator or the like thoroughly drafts a plan and executes programing so that a collision among the actual guided vehicles (AGVs) A0 to A6 traveling on each of the travel routes R0 to R6 or deadlock does not occur and stores the control program in a storage portion of the actual guided-vehicle travel controller (AGV controller) 8. This control program incorporates a conveyance area map and the like and also incorporates travel control data such as travel conditions (travel-interference avoidance information among the automated guided vehicles, stop position information and the like), travel route information, setting information (traveling speed information at each position of the automated guided vehicle, obstacle detection-distance information and the like).

Note that, in this example, it is supposed that the work is performed under such conditions that time required for the first process is 2 minutes, time required for the second process is 3 hours, time required for the third process is 1 minute, time required for the fourth process is 50 hours, time required for the fifth process is 40 hours, time required for the sixth process is 3 minutes, and convenance between each process is performed at the same time in accordance with such process flows. Conveyance corresponding to a required production amount (20 sessions per hour, for example) is performed between each process.

### <Explanation on One Embodiment of Present Invention>

A travel control system SS of the automated guided vehicle according to this embodiment is used in a battery-cell inspection plant or the like described above and is configured by including, as shown in FIG. 2, the actual guided-vehicle travel controller 8 including the actual control program which causes a plurality of the actual guided vehicles A0 to A6 to travel along the plurality of travel routes R0 to R6 crossing one another in the actual conveyance area 7, a virtual guided-vehicle travel controller 9 including a virtual control program which causes a plurality of virtual guided vehicles B0 to B6 to travel by imitating the motion of the actual guided vehicles A0 to A6 in a virtual conveyance area, a virtual guided-vehicle travel monitoring portion 11 which, if a collision or stop abnormality of the virtual guided vehicles B0 to B6 controlled by this virtual guided-vehicle travel controller 9 occurs in the virtual conveyance area, detects and records the abnormal phenomenon, a monitoring-result output portion 12 which outputs the abnormal phenomenon detected by this virtual guided-vehicle travel monitoring portion 11 to outside, and an update-data input portion 13 which receives update data modified by referring to the abnormal phenomenon output from this monitoring-result output portion 12 from the outside and reflects finally the update data in the actual control program.

That is, when this travel control system SS of the automated guided vehicle is explained on a device part SS 1 on a virtual side mainly on the virtual guided-vehicle travel controller 9, this travel control system SS is configured by including a travel-control data input portion 10 into which travel control data used in the actual control program for causing the plurality of actual guided vehicles A0 to A6 to travel along the plurality of travel routes R0 to R6 crossing one another in an actual travel area (actual conveyance area 7) is input, the virtual guided-vehicle travel controller 9 including the virtual control program for causing the plurality of virtual guided vehicles B0 to B6 to travel by imitating the shape and the motion of the actual guided vehicles A0 to A6 in the virtual travel area on the basis of the travel control data from this travel-control data input portion 10, the virtual guided-vehicle travel monitoring portion 11, which, in a case of occurrence of a collision or stop abnormality of the virtual guided vehicles B0 to B6 controlled by this virtual guided-vehicle travel controller 9 in the virtual travel area, detects and records the abnormal phenomenon, and the monitoring-result output portion 12 which outputs the abnormal phenomenon detected by this virtual guided-vehicle travel monitoring portion 11 to the outside. Here, the virtual guided-vehicle travel controller 9, the virtual guided vehicles B0 to B6, and the virtual guided-vehicle travel monitoring portion 11 constitute a virtual travel system portion SS11 which monitors the virtual guided vehicles B0 to B6 while allowing them to travel.

Moreover, when this travel control system SS of the automated guided vehicle is explained on a device part SS2 on an actual side mainly on the actual guided-vehicle travel controller 8, this travel control system SS is configured by including the actual guided-vehicle travel controller 8 including an actual control program for causing the plurality of actual guided vehicles A0 to A6 to travel along the plurality of travel routes R0 to R6 crossing one another in the actual travel area (actual conveyance area 7), a travel-control data output portion 16 which outputs the travel control data included in the actual control program used in the actual guided-vehicle travel controller 8 as information for simulation for causing the plurality of virtual guided vehicles B0 to B6 to travel in the virtual conveyance area by imitating the shape and the motion of the actual guided vehicles A0 to A6 to the outside, and the update-data input portion 13 which receives the update data created on the basis of the result of simulation using the aforementioned information for simulation from outside and finally reflects the update data in the actual control program.

Here, as the actual guided vehicles A0 to A6 and the actual guided-vehicle travel controller 8, the aforementioned existing AGVs and AGV travel controllers are used. As described above, the actual control program mounted on the actual guided-vehicle travel controller 8 incorporates the conveyance area map and the like and also incorporates the travel control data such as travel conditions (travel-interference avoidance information among the automated guided vehicles, stop position information and the like), the travel route information, the setting information (traveling speed information at each position of the automated guided vehicle, obstacle detection-distance information and the like).

The virtual guided-vehicle travel controller 9 includes a virtual control program for causing the virtual guided vehicles B0 to B6 having the same shape as those of the actual guide vehicles A0 to A6 to travel in the virtual conveyance area accurately corresponding to the actual conveyance area 7 by imitating the motion of the actual guided vehicles A0 to A6. Into this virtual guided-vehicle travel controller 9, the same travel control data as the travel control data input into the aforementioned actual guided-vehicle travel controller 8 is input through the travel-control data input portion 10. The virtual control program mounted on the virtual guided-vehicle travel controller 9 is created on the basis of an ordinary operation simulation method, and by inputting the same travel control data as the travel control data input into the actual guided-vehicle travel controller 8 into this virtual control program, each of the virtual guided vehicles B0 to B6 can be caused to travel in the same mode as that of each of the corresponding actual guided vehicles A0 to A6. That is, if the travel control data (travel conditions (travel-interference avoidance information among the automated guided vehicles, stop position information and the like), the travel route information, and the setting information (traveling speed information at each position of the automated guided vehicle, obstacle detection-distance information and the like)) is the same, the plurality of virtual guided vehicles B0 to B6 are designed to perform the completely same motions as those of the plurality of corresponding actual guided vehicles A0 to A6 in the virtual conveyance area accurately corresponding to the actual conveyance area 7. Moreover, a cycle time for executing a routine in this virtual control program can be executed in a time shorter (one tenth, for example) than the cycle time of the actual control program.

This virtual guided-vehicle travel controller 9 has a display portion 14 for dynamically displaying the simulation contents on a display attached. On this display portion 14, at least a conveyance area, a travel route, and a plurality of virtual guided vehicles B0 to B6 are displayed in a diagram or the like and the diagram or the like is configured to be moved with progress of time. If the display on the display portion 14 is two-dimensional display, for example, it is preferable that accurate profiles of the virtual guided vehicles B0 to B6 on a plan view are displayed clearly. The display on the display by the display portion may be three-dimensional display or the like equivalent to the dynamic display by 3DCAD.

The virtual guided-vehicle travel monitoring portion 11 is, in a case of a collision or stop abnormality of the virtual guided vehicles B0 to B6 in the virtual conveyance area when the simulation by the aforementioned virtual guided-vehicle travel controller 9 is executed, to detect and to record the abnormal phenomenon and processes information in a procedure as shown in FIG. 3, for example.

At Step S1, in a state where travel control of the actual guided vehicles A0 to A6 by the actual guided-vehicle travel controller 8 is stopped, start of the travel control simulation of the virtual guided vehicles B0 to B6 by the virtual guided-vehicle travel controller 9 is recognized. In this travel control simulation, for example, the virtual control program mounted on the virtual guided-vehicle travel controller 9 is equivalent to the actual control program of the actual guided-vehicle travel controller 8, and the travel control is executed by executing a routine in each certain cycle time determined in advance. Note that, in this embodiment, the cycle time for executing the routine by the virtual control program is set shorter than the cycle time of the actual control program and is set such that the conveyance works by the virtual guided vehicles B0 to B6 are performed at a speed faster than the conveyance works by the actual guided vehicles A0 to A6.

At Step S2, timestamp information is updated and recorded in each cycle time of the virtual control program, and the processing proceeds to Step S3.

And at Step S3, own positions of the virtual guided vehicles B0 to B6 corresponding to the timestamp information are updated and recorded, and the processing proceeds to Step S4. The own positions can be acquired with accuracy by the unit of millimeter, for example, by a method (SLAM: Simultaneous Localization and Mapping) for presuming the own position by measuring a distance to a fixed object such as a facility or the like placed on a conveyance area map. Moreover, it may be configured such that initial positions are set and the own positions are identified in accordance with traveling directions and moving amounts of the virtual guided vehicles B0 to B6.

At Step S4, whether the virtual guided vehicles B0 to B6 collide with one another or not is detected, and if it is determined that a collision did not occur, the processing proceeds to Step S5, while if it is determined that a collision occurred, the processing proceeds to Step S7. A determination standard is, for example, such that, if profiles of the plurality of virtual guided vehicles B0 to B6 on a plan view overlap, it is determined to be a collision, while if they do not overlap, it is determined that there was no collision.

At Step S5, whether the virtual guided vehicles B0 to B6 made abnormal stops or not is detected, while if it is determined that there was no abnormal stop, the processing proceeds to Step S6, while if it is determined that there was abnormal stop, the processing proceeds to Step S7. A case where the virtual guided vehicles B0 to B6 stop during the travel control, the following (a) and (b) can be considered. (a) Regarding each of the virtual guided vehicles B0 to B6, distances to the other virtual guided vehicles B0 to B6 are also measured sequentially by a distance measuring function used also in the aforementioned SLAM. Under this environment, if the virtual guided vehicles B0 to B6 whose distances to the other virtual guided vehicles B0 to B6 became an obstacle detection-stop distance set in advance or less, they stop the travel. (b) Even with a result of the travel control as disclosed in the aforementioned PTL1 as interference avoidance management among the plurality of AGVs, the virtual guided vehicles stop. At this Step S5, if the virtual guided vehicles B0 to B6 stop for predetermined time (10 seconds, for example) or more due to the aforementioned (a) and/or (b), it is determined that the virtual guided vehicles B0 to B6 made abnormal stop.

At Step S6, it is determined whether the simulation execution time set in advance has elapsed or not, and if it is determined to have elapsed, the processing returns to Step S2, and monitoring is continued, while if it is determined not to have elapsed, the processing proceeds to Step S11, the simulation by the virtual control program is finished, and the monitoring work by the virtual guided-vehicle travel monitoring portion 11 is also finished.

At Step S7, the virtual guided vehicles B0 to B6 determined at Step S4 to have collided or the virtual guided vehicles B0 to B6 determined at Step S5 to have abnormally stopped are identified and recorded, and the processing proceeds to Step S8.

At Step S8, it is detected on which of the travel routes R0 to R6 the virtual guided vehicles B0 to B6 identified at Step S7 were traveling, and travel route information indicating the travel routes R0 to R6 is recorded, and the processing proceeds to Step S9.

At Step S9, the timestamp information recorded at Step S2, the own position information recorded at Step S3, and the travel route information recorded at Step S8 are recorded/stored, and the processing proceeds to Step S10.

At Step S10, the stored information is transferred to the monitoring-result output portion 12, the processing proceeds to Step S11, and the simulation is ended.

The monitoring-result output portion 12 stores the timestamp information, the own position information identified by the unit of millimeters, for example, received from the virtual guided-vehicle travel monitoring portion 11 and the travel route information in association with the virtual guided vehicles B0 to B6 which incurred the collision or the abnormal stop, converts the stored contents to information in a required format, and outputs it to the outside. The output information is to inform which of the virtual guided vehicles B0 to B6 caused the abnormal phenomenon at what position, on which of the travel routes R0 to R6 and at what time to a travel-control creation engine 15, and it may be printed data for printing the information on sheets or image data to be displayed on the display. Note that, teaching information (timestamp information, own position information, travel route information) output from the virtual guided-vehicle travel monitoring portion 11 can be also displayed in a form set down on a moving image illustrating simulation contents on the aforementioned display portion 14, and in this case, the display portion 14 also functions as the monitoring-result output portion 12. That is, from the display portion 14 also functioning as the monitoring-result output portion 12, visual information to inform the abnormal phenomenon to the travel-control creating engine 15 (human) through a visual sense is output.

As the external travel-control creation engine 15 which receives the information output from the monitoring-result output portion 12, a programmer, who is a natural person called a travel-control creator or the like, can be cited as described above, but instead of a person, AI or a rule-based computer and the like can substitute. The case in which the travel-control creation engine 15 is a computer will be described later on the basis of FIG. 4.

Here, a flow of the works using the travel control system SS according to this embodiment will be described below.

First, (1) the conveyance area map, outline sizes and the like of the automated guided vehicles A0 to A6 are set in the virtual guided-vehicle travel controller 9 and then, (2) the travel control data is input into the virtual guided-vehicle travel controller 9.

Then, (3) the virtual travel system portion SS11 is operated. During the operation of the virtual travel system portion SS11, the virtual guided-vehicle travel controller 9 performs simulation, and the virtual guided-vehicle travel monitoring portion 11 executes processing at Step S1 to Step S11 described above. That is, in the case of a collision or stop abnormality of the virtual guided vehicles B0 to B6 in the virtual conveyance area during execution of the simulation, the virtual guided-vehicle travel monitoring portion 11 detects the abnormal phenomenon. The monitoring-result output portion 12 outputs the timestamp information at the time when the detected abnormal phenomenon occurred, the own position information of the relevant virtual guided vehicle, and the travel route information of the virtual guided vehicle. The travel-control creation engine 15 confirms the motion of each of the virtual guided vehicles B0 to B6 and the occurrence of the abnormal phenomenon output by the monitoring-result output portion 12 displayed on the display portion 14. Note that, when the display portion 14 also functions as the monitoring-result output portion 12, the aforementioned timestamp information, the own position information of the relevant virtual guided vehicle, and the travel route information of the virtual guided vehicle can be recognized by watching the screen of the display portion 14.

(4) Then, the travel-control creation engine 15 confirms the timestamp information at the time when the abnormal phenomenon occurred, the own position information of the relevant virtual guided vehicle, and the travel route information of the virtual guided vehicle and modifies the travel control data of the corresponding actual guided-vehicle travel controller 8. More specifically, the travel-control creation engine 15 performs such works for debugging as changing the travel route so that the guided vehicles do not get too close to each other by referring to the timestamp information, the own position information of the relevant virtual guided vehicle, and the travel route information of the virtual guided vehicle, temporarily stopping or ensuring an inter-vehicle distance on the basis of the positional relationship among each of the guided vehicles, setting the traveling speed or the obstacle detection distance again so that the guided vehicle can stop before collision, setting a position for the temporary stop of the guided vehicle again to a position where a collision does not occur or the like and creates new travel control data, that is, update data.

After that, the update data is transferred to the actual guided-vehicle travel controller 8 through the update-data input portion 13, and the update data is reflected in the actual control program.

Moreover, new travel control data (update data) is transferred to the virtual guided-vehicle travel controller 9 from the actual guided-vehicle travel controller 8 through the travel-control data output portion 16 and the travel-control data input portion 10 so that the update data is reflected in the virtual control program, and the virtual travel system portion SS11 is operated again. That is, the aforementioned works (2) and (3) are performed again. Then, the aforementioned works (2) to (4) are repeated until an abnormal phenomenon does not occur anymore during the simulation execution time set in advance.

Then, after modification of the bugs is finished, the update data is input into the actual guided-vehicle travel controller 8 through the update-data input portion 13 (see a solid-line arrow r), and the actual control program of the actual guided-vehicle travel controller 8 is updated to the modified contents. Moreover, this update data (travel control data) is transferred also to the virtual guided-vehicle travel controller 9 through the travel-control data output portion 16 and the travel-control data input portion 10 from the actual guided-vehicle travel controller 8 (see a solid-line arrow s), and the virtual control program of the virtual guided-vehicle travel controller 9 is also updated to the modified contents. That is, the travel control data incorporated in the virtual control program is rewritten to the new contents.

Note that, the update data created by the travel-control creation engine 15 can be output to the virtual guided-vehicle travel controller 9 through the travel-data input portion 10 (see a broken-line arrow t) so as to start the subsequent simulation immediately. In that case, the aforementioned works (2) to (4) are repeated until an abnormal phenomenon does not occur anymore during the simulation execution time set in advance, the finally obtained travel control data (update data) is transferred to the actual guided-vehicle travel controller 8 through the update-data control portion 13, and the update data is reflected in the actual control program.

As described above, according to the travel control system SS of the automated guided vehicle according to the present invention, by mounting the actual control program created by a travel control creator on the actual guided-vehicle travel controller 8 and by executing it, the plurality of actual guided vehicles A0 to A6 can travel along the conveyance routes R0 to R6 set in the conveyance area 7 and perform the conveyance work as conventionally.

Moreover, in this travel control system SS, the virtual guided-vehicle travel controller 9 is also provided with such actual guided-vehicle travel control controller 8, and by mounting the virtual guided-vehicle control program corresponding to the actual guided-vehicle control program on this virtual guided-vehicle travel controller 9 and executing it, the plurality of virtual guided vehicles B0 to B6 corresponding to the actual guided vehicles A0 to A6, respectively, can be caused to travel precisely correspondingly to the actual guided vehicles A0 to A6 in the virtual conveyance area. And when the plurality of virtual guided vehicles B0 to B6 are caused to travel along the plurality of travel routes in the virtual conveyance area, if any of the virtual guided vehicles B0 to B6 collide with one another or abnormally stop for predetermined time or more, the abnormal phenomenon is detected and recorded by the virtual guided-vehicle travel monitoring portion 11. And the record is output in a print format, a screen display format or the like from the monitoring-result output portion 12 and is delivered to the travel-control creation engine 15 (in the case of FIG. 2, a human). Since this record contains the timestamp information at the time when the abnormal phenomenon occurred, the own position information of the relevant virtual guided vehicle, and the travel route information of the virtual guided vehicle, the travel-control creation engine 15 which refers to this output result can easily determine not only whether the abnormal phenomenon has occurred or not but also the occurrence spot and the occurrence cause and discover the bug in the actual control program on which the travel control data is mounted more rapidly than before, and can modify it appropriately.

By repeating the debugging work using the virtual guided-vehicle travel controller 9 as above, completeness of the actual control program and the virtual control program can be improved, and in the end, such travel control system SS of the automated guided vehicle that, even if the actual guided vehicles A0 to A6 are continuously operated for a desired time, a collision or abnormal stop does not occur can be completed.

Moreover, according to the configuration of this embodiment, the aforementioned debugging work can be performed efficiently in a short period of time, and a highly reliable program for travel control of the automated guided vehicle can be completed in a short period of time.

In addition, since the cycle time for executing the routine in the virtual control program can be executed shorter than the cycle time of the actual control program, time required for the simulation itself can be also reduced, and the time required for completion of the highly reliable program for travel control of the automated guided vehicle can be further reduced.

Furthermore, since the display portion 14 is provided, by dynamically displaying the simulation contents on the display, the state of travel of the virtual guided vehicle is illustrated visually understandably, and since the abnormal phenomenon recorded in the virtual guided-vehicle travel monitoring portion 11 is displayed, the debugging work can be also performed at the site by referring to the information relating to the displayed abnormal phenomenon.

Then, since the information recorded in the virtual guided-vehicle travel monitoring portion 11 includes the timestamp information at the time when the abnormal phenomenon occurred, the own position information of the relevant virtual guided vehicle, and the travel route information of the virtual guided vehicle, identification of the cause of the abnormal phenomenon required for the debugging work is facilitated, and the debugging work can be made efficient.

Note that, the present invention is not limited to the embodiments described above.

Hereinafter, a case in which the travel-control creation engine 15 is a computer will be described on the basis of FIG. 4. Portions corresponding to the case where the travel-control creation engine 15 is a human are given the same signs as those in FIG. 1, and the explanation will be omitted.

In this case, the monitoring-result output portion 12 outputs the timestamp information, the own position information identified by the unit of millimeters, for example, and the travel route information received from the virtual guided-vehicle travel monitoring portion 11 to the travel-control creation engine 15. On the other hand, the virtual guided-vehicle travel controller 9 outputs the conveyance area map, the outline sizes of the automated guided vehicles A0 to A6, and the travel control data to the travel-control creation engine 15. The travel-control creation engine 15 performs the debugging work by using all the input information and generates the update data. The generated update data is output to the virtual guided-vehicle travel controller 9 via the actual guided-vehicle travel controller 8 (see the solid-line arrows r, s) and moreover, by outputting the update data to the virtual guided-vehicle travel controller 9 through the travel-data input portion 10 (see the broken-line arrow t), the subsequent simulation can be started immediately. Note that, in this embodiment, the display portion 14 does not necessarily have to be provided.

Moreover, the present invention may be applied not only to the charge/discharge inspection plant of a battery cell but also to a travel control system of an automated guided vehicle used in a physical distribution warehouse, a food plant, an electronic component plant and the like.

The cycle time for executing the routine in the virtual control program may be the same as the cycle time for executing the routine in the actual control program or may be made short to the limit of the capacity of the computer.

The information recorded in the virtual guided-vehicle travel monitoring portion preferably contains the timestamp information at the time when the abnormal phenomenon occurred, the own position information of the relevant virtual guided vehicle, and the travel route information of the virtual guided vehicle as described above, but may be other types of information as long as they are information for promoting efficiency of the debugging work.

Other various variations may be made within a range not impairing the gist of the present invention.

### [Reference Signs List]

- SS: Travel control system of automated guided vehicle
- 8: Actual guided-vehicle travel controller
- 9: Virtual guided-vehicle travel controller
- 10: Travel-control data input portion
- 11: Virtual guided-vehicle travel monitoring portion
- 12: Monitoring-result output portion
- 13: Update-data input portion
- 14: Display portion
- 16: Update-data input portion

## Claims

1. A travel control system of an automated guided vehicle, comprising:
an actual guided-vehicle travel controller including an actual control program which causes a plurality of actual guided vehicles to travel along a plurality of travel routes crossing one another in an actual conveyance area;
a virtual guided-vehicle travel controller including a virtual control program which causes a plurality of virtual guided vehicles to travel by imitating a shape and a motion of the actual guided vehicles in a virtual conveyance area;
a virtual guided-vehicle travel monitoring portion which detects and records an abnormal phenomenon, in case of a collision or a stop abnormality of the virtual guided vehicle controlled by the virtual guided-vehicle travel controller in the virtual conveyance area;
a monitoring-result output portion which outputs the abnormal phenomenon detected by the virtual guided-vehicle travel monitoring portion to outside; and
an update-data input portion which receives update data modified by referring to the abnormal phenomenon output from the monitoring-result output portion and causes the update data to be finally reflected in the actual control program.

2. A travel control system of an automated guided vehicle, comprising:
a travel-control data input portion into which travel control data used for an actual control program which causes a plurality of actual guided vehicles to travel along a plurality of travel routes crossing one another in an actual travel area is input;
a virtual guided-vehicle travel controller including a virtual control program for causing a plurality of virtual guided vehicles to travel by imitating a shape and a motion of the actual guided vehicles in a virtual travel area on the basis of travel control data from the travel-control data input portion;
a virtual guided-vehicle travel monitoring portion which detects and records an abnormal phenomenon, in case of a collision or a stop abnormality of the virtual guided vehicle controlled by the virtual guided-vehicle travel controller in the virtual travel area; and
a monitoring-result output portion which outputs the abnormal phenomenon detected by the virtual guided-vehicle travel monitoring portion to outside.

3. A travel control system of an automated guided vehicle, comprising:
an actual guided-vehicle travel controller including an actual control program which causes a plurality of actual guided vehicles to travel along a plurality of travel routes crossing one another in an actual travel area;
a travel-control data output portion which outputs the travel control data included in the actual control program used by the actual guided-vehicle travel controller to outside as information for simulation which causes a plurality of virtual guided vehicles to travel in a virtual conveyance area by imitating a shape and a motion of the actual guided vehicle; and
an update-data input portion which receives update data created on the basis of a simulation result by using the information from the outside and which causes the update data to be finally reflected in the actual control program.

4. The travel control system of an automated guided vehicle according to claim 1, wherein
the virtual guided-vehicle travel controller is provided together with the actual guided-vehicle travel controller.

5. The travel control system of an automated guided vehicle according to claim 1, 2 or 4, wherein
a cycle time for executing a routine in the virtual control program is capable of execution shorter than the cycle time of the actual control program.

6. The travel control system of an automated guided vehicle according to claim 1, 2, 4 or 5, wherein
a state in which the plurality of virtual guided vehicles travel in the virtual conveyance area by being controlled by the virtual control program is displayed so that it can be visually recognized from outside, and a display portion for displaying an abnormal phenomenon recorded in the virtual guided-vehicle travel-monitoring portion is provided.

7. The travel control system of an automated guided vehicle according to claim 1, 2, 4, 5 or 6, wherein
information recorded in the virtual guided-vehicle travel-monitoring portion includes timestamp information at the time when the abnormal phenomenon occurred, own position information of the relevant virtual guided vehicle, and travel route information of the virtual guided vehicle.
